# EUROPEAN PATENT SPECIFICATION

(11) **EP 2 121 802 B1**
(45) Date of publication and mention of the grant of the patent: **20.10.2010**
(21) Application number: 08715985.1
(22) Date of filing: 22.02.2008
(51) Int. Cl.: C08G 63/49, C09D 11/00, C09D 167/08

(54) **GRAFTED AUTOXIDISABLE POLYESTER RESIN**
AUTOXIDIERBARES PFROPFPOLYESTERHARZ
RÉSINE DE POLYESTER AUTOXIDISABLE GREFFÉE

(30) Priority: 22.02.2007 EP 07003654; 12.07.2007 EP 07112347
(43) Date of publication of application: 25.11.2009
(73) Proprietor: DSM IP Assets B.V., 6411 TE Heerlen (NL)
(72) Inventor: HENDRIKS, Johannes, Wilhelmus, Maria, NL-8022 AW Zwolle (NL); GRISNICH, Willem, NL-8022 AW Zwolle (NL); REUVERS, Albertus, Johannes, NL-8022 AW Zwolle (NL); DAVIES, Philip, John, NL-8022 AW Zwolle (NL)
(74) Representative: Schmitt, Maja
(86) International application number: PCT/EP2008/001434
(87) International publication number: WO 2008/101722

(56) References cited:
- EP-A- 1 172 395
- WO-A-2005/012370
- DE-A1- 19 755 535
- DATABASE WPI Week 200043 Derwent Publications Ltd., London, GB; AN 2000-485660 XP002458660 & JP 2000 169563 A (TOYO INK MFG CO LTD) 20 June 2000 (2000-06-20)
- DATABASE WPI Week 200728 Derwent Publications Ltd., London, GB; AN 2007-286770 XP002458661 & JP 2007 046000 A (TOYO INK MFG CO) 22 February 2007 (2007-02-22)

## Description

The invention relates to a method for preparing a grafted autoxidisable polyester resin, the grafted autoxidisable polyester resin obtained by that method, the use of the grafted autoxidisable polyester resin in a high solid coating composition and a coating composition comprising the grafted autoxidisable polyester resin.

Alkyd paints for professional and do-it-yourself applications are subject to increasing technical and ecological restrictions. Because of environmental protection the reduction in emissions of volatile organic compounds is required and the use of high-solid alkyd resins is one solution for this problem. The essential technical problem in formulating high-solids coatings is to reduce the resin viscosity without serious adverse effect on coating properties such as for example drying properties and hardness.

US 2706191 describes a method of producing synthetic polymeric or resinuous bodies containing both ester linkage and amino or amido linkages, soluble in isopropanol-xylol capable of crosslinking and curing when heated in mixture with an aldehydic curing agent.

GB 1221432 concerns soluble unsaturated polyester amide resins soluble in a variety of solvents, providing a process to manufacture such resins.

EP 1172395 is related to a process for producing polymerizable coating or molding compositions comprising reacting a dienophile with unsaturated triglycerides in a vegetable oil and reacting this with a polycondensate compound selected from polyols, epoxides and diamines.

DE 1495142 relates to alkyd resins wherein an adduct of carboxylic acid or ester with conjugated double bonds is reacted with a polyhydric alcohol.

US 2146671 relates to synthetic resins produced by reacting polybasic acids or their partial esters with equivalent proportions of polyhydric alcohols.

US 3644237 concerns the production of polyurethane foams formed by reaction between a polyisocyanate and a glycol ester of a tribasic adduct.

WO 2005/012370 relates to hydroxyl-functional binder components containing a linear or branched main chain having a polymethylene or polyester structure, said components having grafted cyclic imide structures on the main chain.

JP 2000169653 discloses a resin that is a Diels-Alder reaction product of a resin, an unsaturated carboxylic acid or its anhydride and a dihydric alcohol for printing inks.

JP2007046000 discloses an alkyd resin composition obtained by the esterification of poyhydric alcohol, an oil or fatty acid monoester and an unsaturated carboxylic acid.

RO86737 discloses an adduct of an unsaturated dicarboxylic acid with an unsaturated vegetable oil.

It is an object of the invention to provide a method of preparing a grafted autoxidisable polyester resin for a high solid alkyd coating. In another aspect of the invention the object is to provide an improved grafted autoxidisable polyester resin or an improved coating composition comprising a grafted autoxidisable polyester resin. The improvement may for example be that a coating comprising the grafted autoxidisable polyester resin exhibits one or more of desired properties such as, for example, flexibility, outdoor durability, fast drying, high solids content, low viscosity and/or color stability.

In a method according to the invention, the grafted autoxidisable polyester resin is obtained by grafting a diacid or its anhydride on a first agent and further reacting the diacid or its anhydride with a second agent that can be alcohol, dialkanolamine or mixtures thereof. For clarity, the singular form of diacid, anhydride, alcohol, dialkanolamine include both the singular and the plural.

Specifically the invention relates to a method for preparing a grafted autoxidisable polyester resin as claimed according to present claim 1 wherein the resin is obtained by steps comprising:
a) grafting of at least a diacid or its anhydride onto a first agent by a Diels-Alder and/or Ene reaction; and
b) reacting the product of step a) with a second agent;
   wherein the first agent comprises at least one first functionality selected from a
   group consisting of a first set of conjugated double bonds or a first allylic hydrogen;
   wherein the first agent comprises at least one further functionality selected from the group consisting of a set of conjugated double bonds, allylic hydrogen, non conjugated double bond, OH group, COOH group and amino group;
   wherein the second agent is selected from the group consisting of alcohol with a number average hydroxy functionality > 2.0, dialkanolamine or mixtures thereof;
   and
wherein the grafted autoxidisable polyester resin has an oil length ≥ 80, a number average molecular weight Mn ≥ 1000 g/mol and a PDI ≥ 3.

Preferably the grafting of step a) is done by a Diels-Alder reaction.

In another embodiment there is provided a grafted autoxidisable polyester resin obtainable by the method according to the invention.

Autoxidation by the resin in coating compositions, also interchangeably known as oxidative drying or air-drying, mainly happens via the formation of crosslinks. With crosslinking by autoxidation is meant that crosslinking results from an oxidation occurring in the presence of air and usually involves a free radical mechanism and is preferably metal-catalysed resulting in covalent crosslinks.

Herein the term diacid or its anhydride is understood to incorporate the diacid alone or a mixture of diacids, the anhydride alone or a mixture of anhydrides and any combination of both diacid(s) and acid anhydride(s).

Due to improved reactivity of the anhydrides, it is preferred that at least part of the "diacid or its anhydride" is an anhydride and it is more preferred to mainly or only use the anhydride.

The diacid or its anhydride should be chosen from diacids or anhydrides, which are capable of being grafted to a first agent. Particularly, it was found to be advantageous for the diacid or its anhydride to comprise at least one double bond. This allows the diacid or its anhydride to be grafted to the first agent by the Ene or Diels-Alder reaction as described below. The group of advantageous diacids and anhydrides therefore preferably comprise maleic acid, maleic anhydride, itaconic acid, fumaric acid or mixtures thereof. Less preferred, but still belonging to this group are tetrahydrophthalic acid and tetrahydrophthalic anhydride. The most preferred of this group to be used in the Diels-Alder reaction is maleic anhydride, however good results were obtained also with fumaric acid.

It is highly preferred that the diacid or its anhydride comprises at least 80 % of the molar amount of diacid or its anhydride selected from the group consisting of maleic acid, maleic anhydride, itaconic acid, fumaric acid or mixtures thereof. The rest of the diacid or its anhydride are preferably also fully or partially chosen from this group, but may also comprise other diacids or anhydrides which can be grafted by the Ene or Diels-Alder reaction, and diacids or anhydrides which cannot be grafted by the Ene or Diels-Alder reaction.

The most preferred diacid and corresponding anhydride are maleic acid and maleic anhydride. This is mainly due to high reactivity due to the combination of structural relationship between the double bond and the two carbonyl groups or anhydride group combined with a steric favorable arrangement. Therefore, in a more preferred embodiment, the diacid or its anhydride is substantially maleic acid or maleic anhydride. By substantially maleic acid or maleic anhydride herein is meant that maleic acid and maleic anhydride accounts for more than 95 % of the molar amount of the diacid or anhydride of the grafted autoxidisable polyester resin, such as more than 98 % of the molar mount of the diacid or anhydride. Maleic acid and maleic anhydride may be used individually without the other or as a mixture of acid and anhydride.

The first agent comprises at least one first functionality selected from a group consisting of a first set of conjugated double bonds or a first allylic hydrogen, as this allows the first agent to undergo favorable grafting with the diacid or its anhydride. Particularly it was found to be advantageous that the diacid or its anhydride comprises a double bond so that the grafting may take place via the Diels-Alder reaction or Ene reaction. The Diels-Alder and Ene reactions are highly advantageous in the present invention, as these reactions are cheap and easy to conduct. However, other known polymerisation reactions are also possible to achieve grafting. The Diels-Alder and Ene reactions are fast and relatively simple to handle and no substantial side reactions are envisaged. From a manufacturing point of view, the present methods and products hence also represent a great step forward. The reactions are exothermal, but it was found that this could advantageously be controlled by mixing a compound that is used for the preferred endcapping of OH groups into the reactor at an early stage so that the endcapping molecules may act as a heat stabilizer.

Diels-Alder reaction is a cycloaddition between a conjugated diene and a substituted alkene. In the present invention, the conjugated diene is preferably arranged in the first agent. By conjugated diene is meant

R_{α}-HC=CH-HC=CH-R_{β}

where R_{α} and R_{β} are parts of the backbone of the compound originally comprising the set of conjugated double bonds.

The reaction takes place via a single transition state leading to the grafted diacid or grafted anhydride as shown below: 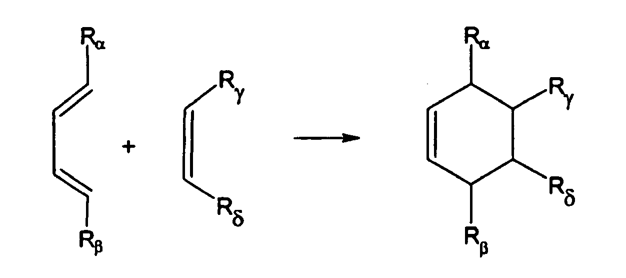 where R_{α} and R_{β} are parts of the backbone of the compound originally comprising the set of conjugated double bonds and where R_{δ} and R_{γ} are parts of the diacid or anhydride.

The substituted alkene is typically situated on the backbone of the diacid or its anhydride. However, the opposite situation where the conjugated diene is present in the diacid or its anhydride and the substituted alkene is in the first agent is also feasible under the present invention. The conjugated diene should be able to exist in the s-cis formation to sterical enhance the Diels-Alder reaction. An example of a suitable diene is tung oil and dehydrated castor oil.

According to the present invention, the Diels-Alder reaction should preferably be conducted at temperatures of about 140 °C to 200 °C, and more preferably at temperatures of about 150 °C to 175 °C as this leads to adequate reaction speed without substantial degradation of the product or reagents.

It should be observed that the Diels-Alder reaction is reversible and hence in a preferred embodiment the amount of first agent used is substantially higher than the stoichiometric ratio, to force the reaction towards the grafted molecule.

The Ene reaction is a chemical reaction between an alkene with an allylic hydrogen and a compound containing multiple bond. In the present case, the allylic hydrogen is preferably arranged on the first agent and when the first agent is a fatty acid or a modified fatty acid, the allylic hydrogen is preferably arranged away from an acid group of the first agent. By allylic hydrogen is meant a hydrogen atom arranged on a carbon atom adjacent to a carbon double bond, such as the H' in

R^{2a} - CH'₂ - CH = CH - R^{1a}

where R^{1a} and R^{2a} are part of the backbone (or an H) of the compound comprising the allylic hydrogen.

The multiple bond is preferably a carbon-carbon double bond situated on the backbone of the diacid or its anhydride. Most preferably, the double bond is situated next to an electrophilic group, such as one or more of the acid groups or the acid anhydride group.

An example of an first agent with an allylic hydrogen is soybean oil or linseed oil.

The Ene reaction takes place via formation of an activated intermediate ring formation and leads to a substituted alkene with a double bond as shown below: 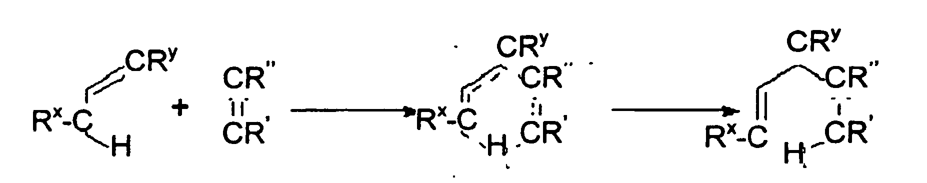 where R^{y} and R^{x} are a rest of oil (fatty acid chain) and R' and R" are part of the diacid or anhydride.

According to the present invention, the Ene reaction should preferably be conducted at about 140 °C to 200 °C, preferably about 170 °C to 195 °C as this leads to adequate reaction speed without substantial degradation of the product or reagents. Therefore, if only the Ene reaction or a combination of the Ene reaction and Diels-Alder reaction is relied on for the grafting reaction, then a two step process is needed for the ester and/or amide groups formation, as the first agent may start to decompose or self-polymerize at least at the higher range of the preferred temperature range of conducting the Ene reaction. Either solely ester or solely amide groups can be formed in a single process, but also any combination of ester and amide groups formed in a single process is possible.

In the present invention, it was found that grafting by the Ene or the Diels-Alder reaction leads to highly advantageous resins, for which surprisingly low viscosities at high molecular weight were realized. Furthermore, it was surprisingly observed that the use of the resin according to the invention in a coating lead to a reduction in the initial drying time and a faster in-depth drying of the coating. It could be theorized (without being limited thereto) that this is caused by the Ene and Diels-Alder reaction leading to a very compact grafted autoxidisable polyester resin molecule of substantially spherical shape with very high molecular weight. However, the strongest influence on the properties of the obtained grafted autoxidisable polyester resins comes from a special combination of high oil length and relatively high molecular weight, all related to the first agent. This is so because:
a) the high oil length ensures:
   i) low VOC values even at high molecular weight values; moreover
   ii) fast oxygen diffusion into the deeper film layers needed for sufficiently fast in-depth solidification of thick paint layers;
b) the relatively high molecular weight value ensures a limited concentration of oxygen needed to achieve the transition from the liquid into the solid (dried) state.

The invention also enables the making of long oil binders containing a high concentration of unsaturated double bonds (reactive groups).

The grafted autoxidisable polyester resin has oxidative/air drying properties due to the fact that after the first reaction between the diacid or its anhydride and the first agent, there are still two free unsaturated bonds left that can further participate at the autoxidation process. As a result, not only the outer part, but also the core of the (hyperbranched) grafted autoxidisable polyester resin can dry by autoxidation. This feature of the invention is different from the (hyperbranched) polyester resins known from the prior art, because the polyester resins in the prior art have a core of acid that does not appear to dry.

An advantage of having also the core capable of autoxidation is that the drying happens quickly because the oxygen can easily penetrate the resin layer. In this manner, fast in-depth drying takes place: a complete solidification of the grafted autoxidisable polyester resin layer through its entire thickness, without the formation of a skin. The skin formation is a well-known disadvantage of coatings because it hinders the in-depth drying of the resin layer.

The oil length is defined as the number of grams of oil used to produce 100 g of the grafted autoxidisable polyester resin.

For the purpose of the invention, the oil length of the grafted autoxidisable polyester resin is preferably ≥ 80. In a more preferred embodiment, the oil length of the grafted autoxidisable polyester resin ranges from 80 to 98 and even more preferably from 85 to 96.

As a consequence of the high oil length that is preferred for the grafted autoxidisable polyester resin, the viscosity of the grafted autoxidisable polyester resin of the invention is rather low, which makes the polyester resin of the invention suitable for compositions having a high solids content. The viscosity of the polyester resin of the invention is significantly lower than for traditional polyesters of a similar molecular weight. For example, for 100 % solids content the polyester resin of the invention has preferably a viscosity of less than 500 Pa.s when measured at 23 °C.

The number average molecular weight Mn of the grafted autoxidisable polyester resin is preferably ≥ 1000 g/mol. In a more preferred embodiment the Mn in the range of from 1000 g/mol to 10.000 g/mol.

The polydispersity index (PDI) is defined as the ratio between the weight average molecular weight Mw and the number average molecular weight Mn (PDI = Mw/Mn). Preferably, the polydispersity index is ≥ 3, more preferably the polydispersity index is ≥ 5, even more preferably the polydispersity index is ≥ 10, however even a polydispersity index larger than 25 is possible to achieve.

Due to the specific combination of a long oil length and of the relatively high weight average molecular weight, the grafted autoxidisable polyester resin of the invention is a very suitable binder for formulating coating compositions having a low viscosity coupled with a fast drying to achieve fast solidification of thick layers of low-VOC architectural paint films by means of autoxidation.

The fast air-drying is also helped by the air-drying backbone of the grafted autoxidisable polyester resin that is not traditionally present in other types of traditionally made hyperbranched type air-drying polyester resins.

The combination of a high oil length and yet a relatively high Mn (or Mw) is quite a unique combination of properties of the grafted autoxidisable polyester resin of the invention because generally the molecular weight tends to decrease with increasing of the oil length. By employing a traditional alkyd chemistry this combination of high oil length and still relatively high Mn is very difficult to achieve.

To allow the functionality of the resin to increase or to allow for further reactions of the first agent, the first agent should further comprise at least one further functionality, such as one, two, three, four or more further functionalities. When the first agent is a larger molecule such as an oil molecule, the number of further functionalities may be larger such as 6-12 or even more. By functionality is herein meant presence of a functional group. Preferably the first agent comprises at least one further functionality selected from the group consisting of a set of conjugated double bonds, allylic hydrogen, non conjugated double bond, OH group, COOH group and amino group.

It should be observed that the functionality of the combined molecule of the diacid or anhydride grafted to the first agent has a combined functionality of at least three (two acid groups / double functionality of the anhydride group and the functionality of the "further functionality" from the first agent). Therefore, the two acid groups or the anhydride group may react to a second agent to form a polyester-like backbone, while the further functionality of the first agent (from the fatty acid) may form (cross)links to neighboring molecules or to the same molecule. Thereby a very compact hyperbranched-like structure is formed.

The first agent will typically add both molecular weight and functionality to the resin by grafting. It could be theorized (without being limited thereto) that due to the three dimensional structure of the grafted autoxidisable polyester resins according to the invention, this increase in molecular weight and functionality is achieved without substantial increase in the size of the resin molecule and changing of the substantially spherical shape of the molecule. Therefore, the average molecular weight of the resin is increased without the increase in viscosity that would typically be expected for an increase in molecular weight for polymers. It could further be theorized (without being limited thereto) that the spherical shape allows for the observed reduction of initial drying as well as faster in-depth drying and that the increased functionality allows for formation of a stronger final three dimensional network after curing as well as great opportunities of tailoring of the properties of the polyester resin of the invention.

Preferably the first agent is selected from the group consisting of unsaturated fatty acids, modified fatty acids and oils. The first agent may be derived from a natural source or it may be a synthetic molecule. The use of a first agent derived from a natural source is advantageous with regard to high availability and low cost, but may in some cases be disadvantageous in a relatively high variation in the molecular structure of the first agent.

It was found to be particularly advantageous that the first agent has more than one further functionality. It could be theorized that this may be due to the even more compact sphere-like structure that this will lead due to self-linking or increased branching. This may for example be realized by utilizing glycerides (synthetic or from a natural source), such as tung oil, as the first agent. Tung oil typically has a capability of grafting 4-6 molecules of the diacid or anhydride and hence leads to a highly branched structure. Other oils or synthetic first agents may have capability of grafting more diacid or anhydride molecules, such as up to 10, 15, 20 or even more for highly functionalized first agents.

Synthetic first agents may for example be derived by reaction between smaller organic molecules of a well defined structure. A highly preferred class of synthetic first agents are fatty acids comprising conjugated double bonds reacted with glycerol, penta glucose or other sugars, such as penta acid and/or ester of rosin or penta acid and/or ester of tung oil fatty acid. Synthetic first agents are advantageous in that they have a relatively known structure with limited variation and hence allows for a better defined final structure of the grafted autoxidisable polyester resin. Furthermore, higher glycols (with more than 2 OH functionality) allow for a higher degree of branching with a larger freedom to tailor the properties of the final resin. The synthetic first agent may be synthesized prior to preparation of the grafted autoxidisable polyester resin or *in situ* during the synthesis of the grafted autoxidisable polyester resin. Preferred examples of higher glycols are dipentaerythritol and sugars.

With regard to functionality, it is preferred that the first agent comprises at least four double bonds, preferably the first agent comprises at least two sets of conjugated double bonds and most preferably comprises at least three sets of conjugated double bonds. This allows the first agent with more than one diacid or its anhydride to be grafted to other first agent on the same or neighbouring molecules. Such additional grafting may take place during the preparation of the resin. Alternatively, such additional double bonds may participate in crosslinking during curing of a coating composition comprising the grafted autoxidisable polyester resin according to the invention.

Particularly advantageous resins may be obtained when the first agent comprises at least 80 % by weight selected from the group consisting of unsaturated oils such as soybean oil, tall oil, tung oil, calendula oil, rosin, sunflower oil, dehydrated castor oil, linseed oil, corresponding fatty acids (for example tung oil fatty acid, tall oil fatty acid or soybean fatty acid), corresponding esters (for example rosin esters, or tung oil fatty acid esters) and mixtures thereof. This group encompasses mixtures of the members of the group, such as mixtures comprising various types of the same class of compounds (for example soybean oil together with tung oil), mixtures comprising same types of different classes of compounds (for example tung oil together with tung oil fatty acid), and mixtures comprising various types of different classes of compounds (for example tung oil together with soybean fatty acid and rosin esters). Preferably the unsaturated oils and derived fatty acids and esters are more folded unsaturated oils and derivates, i.e. oils, fatty acids or esters having two, three or more double bonds. More preferred first agents are tall oil, tung oil, calendula oil, rosin, sunflower oil, dehydrated castor oil, linseed oil, corresponding fatty acids (for example tung oil fatty acid or soybean fatty acid), and corresponding esters (for example rosin esters, or tung oil fatty acid esters).

The most preferred first agent is soybean fatty acid and/or tung oil, with a resin according to the invention preferably comprising a first agent with at least 80 % by weight of tung oil. Preferably the first agent is substantially tung oil. By substantially tung oil is here meant that only smaller amounts of other first agents were present, the first agent comprising more than 95 % by weight of tung oil, more preferably more than 98 % by weight of tung oil.

Preferably the first agent has at least one eleostearic moiety. Herein by eleostearic moiety it is meant a moiety that consists of 3 conjugated double bonds. Examples of first agent containing such moieties include among others eleostearic acid, tung oil or calendula oil. These have in their structure one or more eleostearic moeities. The advantage of when the first agent contains an eleostrearic moiety is that it has a much better air-drying performance than a non-eleostearic moiety containing agent. In this case even if some of the double bonds are reacted after grafting, there is an activated hydrogen formed that insures the air-drying of the grafted autoxidisable polyester resin.

Tung oil is composed primarily of eleostearic acid which is an 18 carbon fatty acid having three conjugated double bonds (an eleostearic moiety). This structure is advantageous because after the Diels Alder reaction of the eleostearic moiety of for example tung oil with the diacid or anhydride, an activated hydrogen is formed, as shown below: 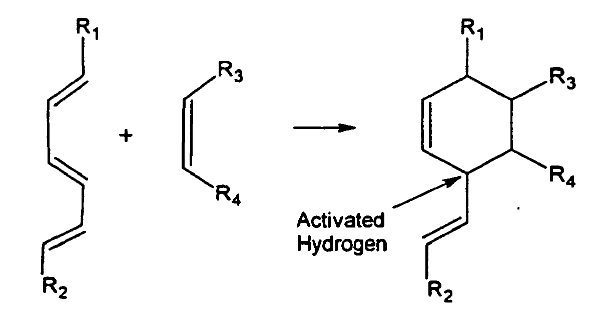 where R₁ and R₂ are rest of oil (fatty acid chain) and R₃ and R₄ are part of the diacid or anhydride.

The activated hydrogen can further participate in the autoxidation process and therefore the speed of oxidative curing (air-drying) is increased.

The two acid groups or the anhydride group of the grafted first agent may further react to a second agent to form a polyester-like backbone and a compact hyperbranched-like structure is formed.

The second agent is selected from the group of alcohol, dialkanolamine or mixtures thereof.

If the second agent is a dialkanolamine or a mixture of dialkanolamine and alcohol, the resulting polyester is generally named a "polyesteramide". For the clarity, in this invention the term polyester therefore also includes polyesteramides.

Below the special features of the case when the second agent to be reacted is dialkanolamine and the resulting polyester resin of the invention is a grafted autoxidisable polyesteramide resin will be discussed.

The dialkanolamine comprises alkanol groups with at least 2 carbon atoms. The alkanol groups may be the same or different. In a preferred embodiment, the dialkanolamine is: 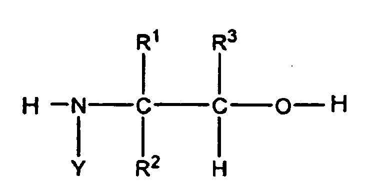 in which: 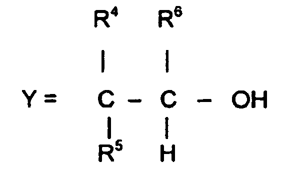 in which R¹, R², R³, R⁴, R⁵ and R⁶ may, independently of one another, be the same or different, H or C1-C4 alkyl.

By C1-C4 alkyl is herein meant any alkyl group having 1 to 4 carbon atoms, i.e. methyl, ethyl, n-propyl, isopropyl, n-butyl, iso-butyl and 1-methyl propyl.

It was found advantageous to use a relatively small dialkanolamine, wherein R¹, R², R³, R⁴, R⁵ and R⁶ may, independently of one another, be the same or different, H, or CH_{3,} as this allowed for a compact polymer with a high functionality. Particularly preferred was found to be the dialkanolamine wherein R³ and R⁶ are CH₃ and/or R¹, R², R⁴ and R⁵ are H, Most favorable was to utilize diisopropanolamine as the dialkanolamine. It is therefore advantageous to utilize a large content of diisopropanolamine. By large content of diisopropanolamine is meant that dialkanolamine comprises at least 80 % by weight of diisopropanolamine. Preferably the dialkanolamine comprises at least 90 % diisopropanolamine. A larger content, such as at least 90 % diisopropanolamine generally led to better results and most preferably the dialkanolamine consists of diisopropanolamine.

In a highly preferred embodiment, for the grafted autoxidisable polyesteramide resin the OH value should be preferably ≤ 10 KOH / g, more preferably ≤ 5 KOH / g. Most preferably the OH value is close to 0, such as ≤ 3 mg KOH / g resin. This is to enhance the curing reaction of the final resin, as lowering the OH value reduces of the amount of secondary amine, which secondary amine may complex with cobalt present in the accelerator (drier salt) of the coating composition.

A further aspect of the reaction concerns a grafted autoxidisable polyesteramide resin component containing at least one diacid or its anhydride grafted on an first agent. A carboxyalkylamide group of the polyesteramide resin component is represented by the following formula 1: 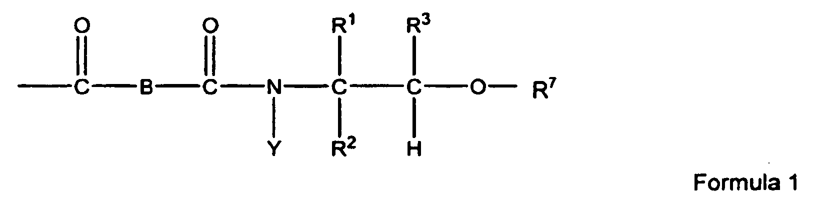 in which: 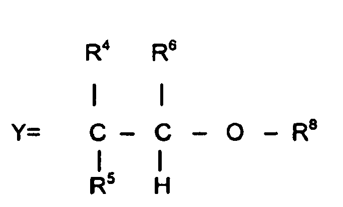 in which R¹, R², R³, R⁴, R⁵ and R⁶ may, independently of one another, be the same or different, H or C1-C4 alkyl and R⁷ and R⁸ may, independently of one another, be the same or different, H, a moiety derived from an unsaturated (C10-C28) carboxylic acid (also referred to as an endcap fatty acid) or an ester. The carboxylic acid is preferably an unsaturated fatty acid with 10 to 28 carbon atoms. Examples of suitable carboxylic acids include dehydrated castor oil fatty acid, linoleic acid and/or linolenic acid.
Examples of useful natural oil fatty acids are tall oil fatty acid, sunflower oil fatty acid, corn oil fatty acid, cottonseed oil fatty acid, peanut oil fatty acid, linseed oil fatty acid, soybean oil fatty acid, rapeseed oil fatty acid, rice bran oil fatty acid, safflower oil fatty acid and/or sesame oil fatty acid. Mixtures of unsaturated fatty acids may also be used. Preferably the carboxylic acid is soybean oil fatty acid or tall oil fatty acid.

B, the diacid or its anhydride backbone should be capable of being involved in the Ene or Diels-Alder reaction. The most preferred diacid B is maleic anhydride:

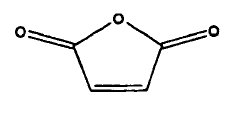

Preferably, the grafted autoxidisable polyesteramide resin obtainable by the method of the invention comprises at least one diacid or its anhydride grafted on an first agent, wherein the carboxyalkylamide group is represented by the formula 1 shown previously, in which R¹, R², R³, R⁴, R⁵ and R⁶ may, independently of one another, be the same or different, H or C1-C4 alkyl; R⁷ and R⁸ may, indenpendently of one another, be the same or different, H, a moiety derived from an unsaturated (C₁₀-C₂₈) carboxylic acid, or an ester bonded saturated or unsaturated C1-C20 alkyl; in which B the diacid or its anhydride backbone is maleic anhydride; wherein the first agent comprises at least one first functionality selected from a group consisting of a first set of conjugated double bonds or a first allylic hydrogen; and wherein the first agent comprises at least one further functionality selected from the group consisting of set of conjugated double bonds, allylic hydrogen, non conjugated double bond, OH group, COOH group and amino group.

The alcohol may in principle be any hydroxy (i.e. OH group) functional compound or mixture of hydroxy functional compounds with a number average hydroxy functionality > 2.0. By number average hydroxyl functionality is herein meant to take into account that even though the individual alcohol molecule has a discrete number of hydroxy groups, mixtures of alcohols typically will have a non-discrete medium hydroxy functionality. For example, one molecule may have a hydroxy functionality of 1 and another molecule may have a hydroxy functionality of 3. This will lead to a number average hydroxy functionality of 2.

In a preferred embodiment, the alcohol has a number average hydroxy functionality ≥ 2.5, even more preferred ≥ 2.8 and most preferred ≥ 3.

In a preferred embodiment, the alcohol has a number average hydroxy functionality of ≤ 15, preferably ≤ 10, more preferably ≤ 8, even more preferably ≤ 6, even more preferably ≤ 4.5 and most preferably ≤ 3.5, as this will allow for at least some of the alcohol to participate in crosslinking with neighboring or the same polymer molecule.

The alcohol may comprise aliphatic parts and/or aromatic parts dependent on the required properties of the resin. In one preferred embodiment it was surprisingly found that when the alcohol comprises at least one aliphatic ring, then the resulting resin tend to have an increased hardness.

The alcohol may comprise other functional groups, such as for example one or more acid groups, amine groups, urea groups, ester groups, unsaturations etc. However, it is preferred that the alcohol has only limited number of other functional groups. Particularly, it was found to be advantageous to have the amine number average functionality below about 0.2 since this reduced the yellowing considerably.

The term alcohol designates herein both individual (pure) alcohols as well as mixtures of alcohols unless otherwise stated. The individual alcohols preferably have a functionality of at least 2 to ensure that the alcohol does not act as an endcap group. The alcohol may be a mixture of several alcohols with the same or varying functionality (hydroxy and/or other functional groups).

In a preferred embodiment, at least 50 weight % of the alcohol has a hydroxy functionality ≥ 3, more preferably ≥ 4. More preferably at least 50 weight % of the alcohol has three functional groups, even more preferably at least 50 weight % of the alcohol has four functional groups. Particularly, it was found to be advantageous to utilize an alcohol, wherein at least 80 weight % of the alcohol has a hydroxy functionality ≥ 3, more preferably ≥ 4. More preferably at least 80 weight % of the alcohol has three functional groups, even more preferably at least 80 weight % of the alcohol has four functional groups. In a particularly preferred embodiment, the functionality of the alcohol has substantially solely hydroxy functionality, such as at least 90 weight % of the alcohol has hydroxy functionality, or the alcohol has solely (i.e. 100 weight %) hydroxy functionality.

Preferably at least 50 weight % of the alcohol is selected from the group consisting of glycerol, tri methylol propane, pentaerythritol, di-pentaerythritol, tri-pentaerythritol, isosorbide, hydrogenated bisphenol A, ethylene glycol, propylene glycol, poly ethylene glycol, di ethylene glycol, neo pentyl glycol, sugars like for example cellulose, sucrose, fructose and alike, polyglycerols having from 2 to 10 OH groups and mixtures thereof. In a highly preferred embodiment, the alcohol consists substantially of one or more alcohols selected from the group consisting of glycerol, tri methylol propane, pentaerythritol, isosorbide, hydrogenated bisphenol A, ethylene glycol, propylene glycol, poly ethylene glycol, di ethylene glycol, neo pentyl glycol. By consisting substantially of is here meant that nearly all of the alcohol, such as more than 90 weight %, more than 95 weight % or more than 98 weight % of the alcohol is selected from the group consisting of glycerol, tri methylol propane, pentaerythritol, isosorbide, hydrogenated bisphenol A, ethylene glycol, propylene glycol, poly ethylene glycol, di ethylene glycol, neo pentyl glycol.

The equivalent ratio of diacid or its anhydride, A, to the grafting functionality, x, multiplied with the equivalent ratio, M, of the first agent (A : (x · M)) preferably ranges between 0.25 : 1.00 and 1.50 : 1.00, in which
A = the molar amount of the diacid or its anhydride,
M = the molar amount of the first agent, and
x = the grafting functionality of the first agent.
By grafting functionality, x, (of the first agent) is herein meant the number of sites suitable for grafting per molecule of first agent, such as number of allylic hydrogen and number of sets of conjugated double bonds. The grafting functionality of the first agent is an integer for the individual molecule, such as 1, 2, 3, 4, 5, 6 or even more, but since the first agent may consist of a mixture or may be derived from a natural source with some variation in structure, the grafting functionality of the first agent is typically not an integer but rather a rational positive number. Preferably the grafting functionality of the first agent is at least 1 and preferably 1.5 to 5. For the lower amount of first agent a number of the diacid or anhydride molecules will maintain having double bonds, which again allows the diacid or its anhydride to participate in later reactions such as crosslinking or reaction with endcap fatty acids or other species or additive. The higher amount of first agent corresponds to the situation where substantially all the diacids and corresponding anhydrides are grafted to the first agent. This allows for a well defined intermediate and therefore well defined end product and is particularly used for external mixing of resins (see below). The more preferred ratio of the diacid or its anhydride to the first agent (A : (x · M)) is close to 0.50 : 1.00, such as between 0.40 : 1.00 and 1.00 : 1.00. This leads to a well defined product which is very well suited for later mixing with other polyesters and other types of resin.

Preferably the molar ratio of the second agent to diacid or its anhydride is ≥ 0.5, more preferably ≥ 1.0 and most preferably ≥ 2.0.The lower amounts of diacid or its anhydride corresponds to the situation where the second agent (i.e. alcohol, alkanolamine or mixtures thereof) is allowed to react with other species such as fatty acids. The higher amount of diacid or its anhydride corresponds to the situation with excess of acid groups. This will typically lead to a resin with very low average molecular weight, and by adjusting the ratio between the diacid or its anhydride and the second agent in this end of the range, a very fine control of the final average molecular weight is realized. The reaction between the second agent and a fatty acid or another reagent with affinity for reacting with the alcohol and/or dialkanolamine groups specific for the second agent may be conducted simultaneous with or after the reaction between diacid or its anhydride and the second agent. It is preferred to conduct the reaction between the fatty acid and the second agent simultaneous to the reaction between the diacid or its anhydride and the second agent as this allows for better process control, particularly with regard to temperature control during the exothermal grafting reaction.

A first method according to the invention is preferably conducted with the grafting reaction between the diacid or its anhydride and the first agent being separated at least partially in time and/or space from the reaction between the second agent and the (grafted) diacid or its anhydride.

In a second method according to the invention the two steps of grafting and the formation of ester and/or amide groups may be conducted simultaneously in the sense that all or at least some of: a) the first agent, b) diacid or its anhydride and c) the second agent are mixed directly before substantial reaction takes place.

In the first of the above described methods according to the invention, the diacid or its anhydride is first reacted with the first agent in a ratio (A : (x · M)) ranging between 0.25 : 1.00 and 1.50 : 1.00 at a temperature between 140 °C and 200 °C to form a grafted diacid or its anhydride. Thereafter, (in a second step) the second agent is added in such amount that the molar ratio of the second agent to diacid or its anhydride is ≥ 0.5, preferably ≥ 1 and more preferably ≥ 2. This second step is conducted at a temperature between 120 °C and 260 °C in the case of alcohol, however when preparation of a grafted autoxidisable polyesteramide resin is done (when the second agent is dialkanolamine) then the second step can be conducted at a lower temperature between 120 °C and 180 °C. A grafted autoxidisable polyester resin is obtained through polycondensation with water being removed through azeotropic or vacuum distillation. It was found that when alcohol is used in the reaction, in most cases the second step may be advantageously conducted at a relatively high temperature of between about 200 °C to 260 °C, which leads to a suitable reaction time.

Preferably the diacid or its anhydride is first reacted with the first agent in a ratio (A : (x · M)) of between 0.25 : 1.00 and 1.50 : 1.00 at a temperature between 140 °C and 200 °C to form a grafted diacid or its anhydride, whereafter in a second step the second agent is added in such amount that the molar ratio of the second agent to diacid or its anhydride is ≥ 0.5 at a temperature between 120 °C and 260 °C, such that a grafted autoxidisable polyester resin is obtained through polycondensation.

In the second of the above described methods according to the invention, the diacid or its anhydride (A), second agent and first agent (M) are reacted simultaneously at a temperature between 120 °C and 180°C. Water is removed through azeotropic or vacuum distillation, and the molar ratio of the second agent to diacid or its anhydride is ≥ 0.5, preferably ≥ 1 and more preferably ≥ 2 and wherein the ratio of the diacid or its anhydride to the first agent (A : (x · M)) ranges between 0.25 : 1.00 and 1.50 : 1.00.

Preferably the diacid or its anhydride, second agent and first agent are reacted simultaneously at a temperature between 120 °C and 180 °C, wherein the molar ratio of the second agent to diacid or its anhydride is ≥ 0.5 and wherein the ratio (A : (x · M)) ranges between 0.25 : 1.00 and 1.50 : 1.00.

Alternatively, the diacid or its anhydride, second agent and first agent are reacted simultaneously at least partially at a temperature between 90 °C and 120 °C in the presence of a catalyst, wherein the molar ratio of the second agent to diacid or its anhydride is ≥ 0.5 and wherein the ratio (A : (x · M)) ranges between 0.25 : 1.00 and 1.50 : 1.00.

The method of producing the grafted autoxidisable polyester resin according to the invention further comprises the step of adding an endcap fatty acid. Preferably the endcap fatty acid is added before the ester reaction is initiated, and more preferably the endcap fatty acid is added before the grafting reaction is initiated.

The endcapping reaction may take place after the reaction between the diacid or its anhydride and the second agent or at least partially simultaneously with the reaction between the diacid or its anhydride and the second agent. It is highly preferred to have the endcapping reagent present already during the grafting reaction and also during the reaction between the diacid or its anhydride and the second agent, as the endcapping reagent then will act as a temperature stabilizer during the exothermal grafting and ester and/or amide groups formation reactions.

In one embodiment, the grafted autoxidisable polyester resin or one or more of its constituents are reacted with an endcap fatty acid or another OH group reactive scavenger to obtain a low OH value or to increase the average molecular weight.

Especially in the case of grafted autoxidisable polyesteramide resins it was found that endcapping by fatty acids of the hydroxyl groups is a highly suitable way of reducing the number of free hydroxyl groups, as the reduction of the hydroxyl number is accompanied by an increase in molecular weight without substantial increase in the viscosity of the system. Furthermore, reduction of the hydroxyl number by endcapping with fatty acid is a highly advantageous way of decreasing the initial drying time of a coating composition comprising the grafted autoxidisable polyesteramide resin according to the invention.

With regard to OH value, the grafted autoxidisable polyester resin having alcohol as a second agent is much more flexible than the hyperbranched polyesteramides having dialkanolamine as a second agent, in the sense that the polyester resin according to the present invention that is based on alcohol does not require the very low OH values that are required by hyperbranched polyesteramides based on dialkanolamine needed to prevent the formation of secondary amine leading to retarding of the oxidative curing process. It should be observed therefore that for the part of grafted autoxidisable polyester resins according to the invention, which part comprise no or substantially no amine groups, a low amount of available hydroxy groups are not a requirement to prevent yellowing.

The diacid or its anhydride and the second agent are further reacted with an endcap fatty acid, wherein the endcap fatty acid is an unsaturated (C10-C28) aliphatic carboxylic acid; i.e. an aliphatic carboxylic acid having 10 to 28 carbon atoms. It is preferred that the endcap fatty acid has one or more further functional groups, such as for example double bonds or further acid groups. This allows for introduction of more functional groups into the grafted autoxidisable polyester resin. The endcap fatty acid is an unsaturated C10-C28 aliphatic carboxylic acid, optionally with two, three or more double bonds.

Examples of suitable endcap fatty acids include unsaturated carboxylic acids such as dehydrated castor oil fatty acid, linoleic acid and/or linolenic acid. Examples of useful natural oil fatty acids are tall oil fatty acid, sunflower oil fatty acid, corn oil fatty acid, cottonseed oil fatty acid, peanut oil fatty acid, linseed oil fatty acid, soybean oil fatty acid, rapeseed oil fatty acid, rice bran oil fatty acid, safflower oil fatty acid and/or sesame oil fatty acid. Mixtures of unsaturated fatty acids may also be used as well as scavengers.

The hydroxy groups of the second agent may be endcapped by a fatty acid or a scavenger to facilitate the curing of the resin as discussed previously. By scavenger is herein meant a compound that will either block or remove the OH group.

Examples of scavengers are fatty acids or acid functional polymers or molecules like polyester, carboxylic acids or organic oil moieties; anhydrides such as acetic anhydride, phthalic anhydride, hexahydrophthalic anhydride, succinic anhydride, maleic anhydride or trimellitic anhydride; isocyanates such as cyclo hexyl isocyanate, toluenediisocyanate, isophoron dilsocyanate, hexane diisocyanate; small organic acids such as acetic acid and/or benzoic acid.

In another embodiment, the extent of endcapping of the hydroxy group of the second agent may also be substantially lower than 100 % of the hydroxy groups. In that case, the hydroxy groups of the second agent may be treated with a further scavenger to adjust the average functionality of the resin or to increase the overall average molecular weight. By OH scavenger is herein meant a compound that will either block or remove the OH group. The term further OH scavenger refers to that a fatty acid may be considered an OH scavenger via the endcapping reaction.

Preferably the method of producing the polyester resin according to the invention further comprises the step of adding a further OH scavenger to react to OH groups of the polyester or the first agent so that the OH groups are either blocked or removed. Preferably the OH scavenger is an acid.

The fatty acid or other scavengers may be added at various times of the synthesis of the grafted autoxidisable polyester resin according to the invention. It is possible:
a) to use the fatty acid as a temperature buffer for the exothermic grafting and/or for the ester reaction and/or for the amide reaction by having it present in the reaction mixture when the grafting reaction is initiated and/or when the ester reaction is initiated;
b) to add the fatty acid after the grafted autoxidisable polyester resin formation; or
c) to react the fatty acid with the the second agent prior to the second agent being mixed and reacted with the diacid or its anhydride.

Of these, option a) is the most preferred, as this allows for improved process control during the exothermic reactions without addition of solvents or diluents, which have to be removed later in the process.

Another aspect of the invention concerns a grafted autoxidisable polyester resin obtainable by the method according to the invention. Such a resin is highly advantageous for a number of applications, like for example lubricants, adhesives or high solids coatings.

Other aspects of the invention concern the use of the grafted autoxidisable polyester resin of the invention in a coating, particularly the use in a high solid oxidative drying coating composition. This use is particularly advantageous, as the grafted autoxidisable polyester resin according to the invention allows for a relatively high molecular weight and high oil length while maintaining a surprisingly low viscosity. This again leads to a decrease in initial drying time as well as a reduced in-depth drying time.

A coating composition typically comprises a number of resins, additives, solvents etc. The properties are a result of the combination of the components. By the substitution of even a small fraction of a traditional resin, such as a polyester resin component or an alkyd resin component, with an equivalent amount of the polyester resin according to the invention would influence the overall properties of the coating composition. This is because of the special features of the grafted autoxidisable polyester resin according to the invention determined by the Diels-Alder adduct. For traditional polyester resins, at de-esterification normally the alcohol and the acid are recovered, however, for the polyester resin according to the invention at de-esterification only the alcohol can be recovered in the initial form, the acids will stay connected to the fatty acid forming a Diels-Alder adduct. This is a special feature of the grafted autoxidisable polyester resin according to the invention.

Since the traditional resins have properties relatively close to the expected environmental requirements with regard to content of solvent, an addition of as little as 5% by weight of the resin or resin component according to the invention may in some cases be sufficient for the traditional coating composition to follow the legislation requirements of low solvent content by lowering the viscosity of the coating composition at the same or even a higher average molecular weight. The lowest amount of the grafted autoxidisable polyester resin according to the invention that can be used in a traditional coating composition can be even lower than 5% by weight, as it depends on the formulation and the required final properties of the coating composition. Therefore even relatively low contents of the grafted autoxidisable polyester resin according to the invention are highly technically and commercially advantageous.

Preferably the coating composition comprises at least 5 weight % of the polyester resin according to the invention. Coating compositions with higher contents of grafted autoxidisable polyester resin, such as more than 10 weight % of the resin, more than 20 weight % of the resin, more than 50 weight % of the resin or even more than 75 weight % of the resin, or substantially only grafted autoxidisable polyester resin according to the invention are also highly advantageous.

Preferably, the coating composition comprising a grafted autoxidisable polyester resin wherein the resin is obtainable by a method according to the invention, wherein step a) comprises grafting of at least 5 weight % of a diacid or its anhydride onto a first agent, and wherein the first agent comprises unsaturated oils selected from the group consisting of soybean oil, tung oil, calendula oil, tall oil, rosin, sunflower oil, dehydrated castor oil, linseed oil, corresponding fatty acids, corresponding esters, and mixtures thereof.

For the highest amounts of grafted autoxidisable polyester resin, the solvent content may be reduced far more than required by present (European) legislation and in some cases solvent free coating compositions may be formulated based on resins according to the present invention leading to a substantial environmental advantage of the invention.

In one preferred embodiment, the coating composition comprising the grafted autoxidisable polyester resin has an initial drying time as measured by cotton wool adhesion test of less than 5.5 hours and a VOC of < 100 g/l at an application viscosity of the grafted autoxidisable polyester resin of less than 5.0 Pa s measured at a shear rate of 5000 s⁻¹ at 23 °C.

The situation with addition of a relatively low amount of resin according to the invention in a coating composition corresponds to what could be referred to as external mixing of resins in the sense that the grafted autoxidisable polyester resins used in coating compositions with a low content of grafted autoxidisable polyester resin typically would have a very high degree of grafting and may also have a very high degree of fatty acid endcapping.

Another type of mixing may be referred to as internal mixing. This represents the situation where a substantial amount of the diacid or its anhydride are not grafted on the first agent and/or a substantial fraction of the hydroxy groups of the second agent are not endcapped by a fatty acid. The non-grafted diacid or anhydride may for example be of a type that cannot participate in the grafting reaction or the resin formulation may be deficient in first agent. This allows for a very fine tunable means for controlling the properties of the grafted autoxidisable polyester resin, such as viscosity, average molecular weight, initial drying time and in-depth drying time of a coating composition comprising the resin according to the invention.

When internal mixing is applied, it is preferred that the grafted autoxidisable polyester resin comprises at least 5 % by weight of the diacid or its anhydride is grafted on a first agent. This first agent should comprise a first set of conjugated double bonds or a first allylic hydrogen and at least one further functionality selected from the group consisting of set of conjugated double bond, allylic hydrogen, non conjugated double bond, OH group, COOH group and amino group. Furthermore, the first agent is preferably selected from the group consisting of fatty acids, modified fatty acids and oils, such as soybean fatty acid, tall oil fatty acid, tung oil and/or rosin.

### Illustrative examples of preferred reactions and structures

### Step a) Reaction between a diacid or its anhydride with a first agent:

A highly preferred embodiment is when the diacid is maleic anhydride: 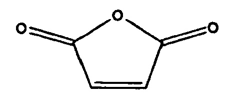 and the first agent is tung oil that contains a large amount of eleostearic fatty acid: 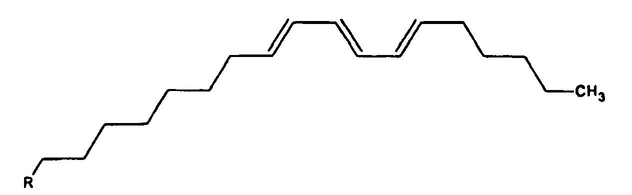 wherein R is representing the rest (other branches) of the first agent (here tung oil).

The maleic anhydride is grafted in step a) of the method of the invention to the tung oil by the Diels-Alder reaction leading to the grafted maleic anhydride adduct:

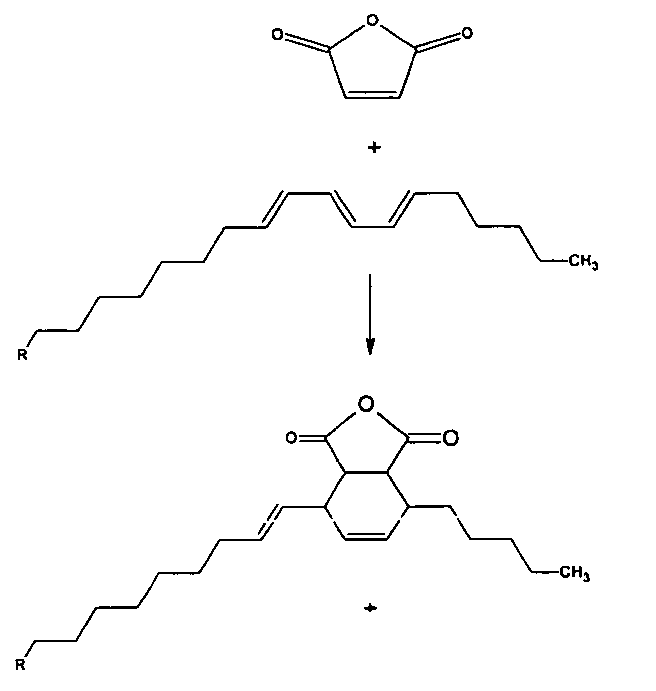

The resulting adduct of the reaction from step a) described above will react further (in step b)) with the second agent.

### Step b) Reaction between the Diels-Alder adduct of step a) and the second agent:

### i) Reaction with alcohol as a second agent

In a preferred embodiment, the alcohol is glycerol (CH₂OHCHOHCH₂OH), and the reaction between glycerol and tung oil grafted maleic anhydride as prepared above is therefore:

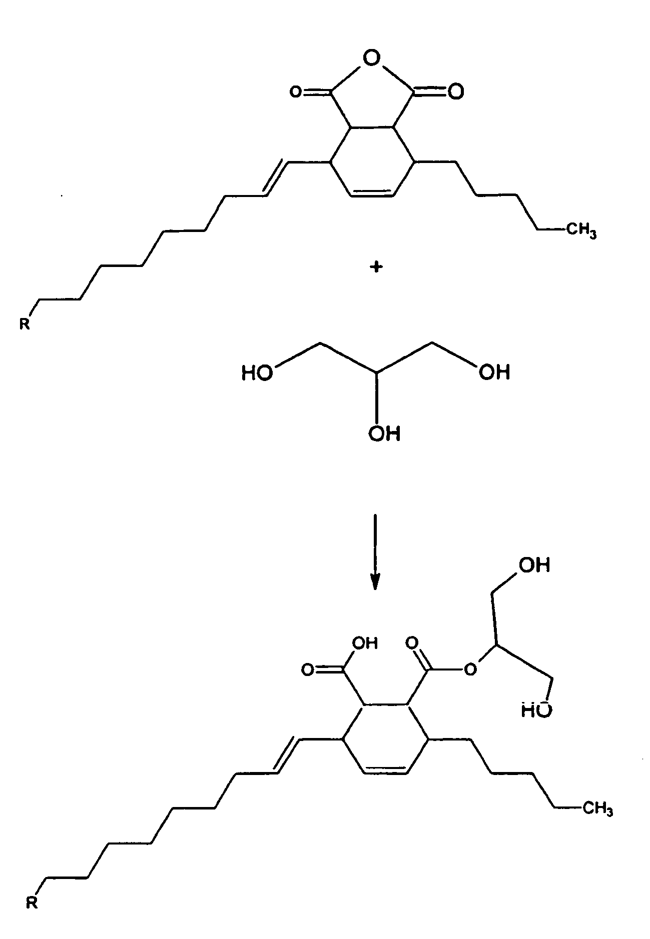

The reactions with the second acid part of the grafted maleic anhydride or the reaction with the other hydroxy groups of the alcohol are not shown for reason of simplicity. Likewise, R representing the other branches of the fatty acid (first agent) is not shown for reason of simplicity. These other branches may likewise be grafted with maleic anhydride or otherwise react with the same or neighbouring molecules for example as indicated below. The resulting molecule may hereafter be endcapped for example by fatty acid or reacted with acid functional polymers or molecules like polyester, carboxylic acids or organic oil moieties. If the first agent also comprises acid groups, such as for example the case when the first agent is a carboxylic acid, then each of these acid groups may react to other molecules or internally to for example OH groups of the same molecule.

The final structure of the grafted autoxidisable polyester resin may for example be represented by the following structure, where in this example the alcohol is glycerol:

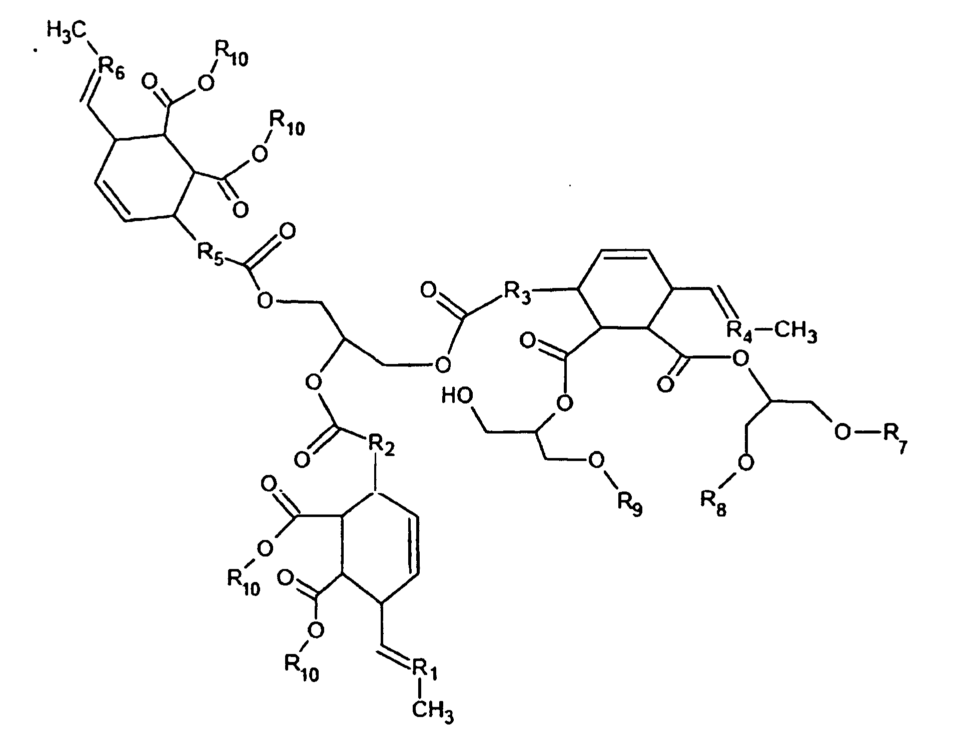

Note: The two possible positions of the linoleic moieties are random as a result of the random selectivity of the Diels Alder addition towards the three conjugated double bonds of the eleostearic moieties.

In this structure, R₁, R₂, R₃, R₄, R₅ and R₆ are parts of tung oil; R₇, R₈ and R₉ are ester bonded fatty acids, polyester chain and/or hydrogen. If the endcapping groups are ester bonded fatty acids, oil molecules or another entity, which may also act as an first agent, one or more of these groups may be grafted to other sites of the same or neighbouring molecules. R₁₀ represents an ester bonded glycerol moiety.

If the endcapping groups are ester bonded fatty acids, oil molecules or another entity, which may also act as an first agent, one or more of these groups may be grafted to other sites of the same or neighbouring molecules.

### ii) Reaction with dialkanolamine as a second agent

In a highly preferred embodiment, the dialkanolamine is diisopropanolamine, and the reaction between the diisopropanolamine and the tung oil grafted maleic anhydride prepared as shown in step a) is therefore:

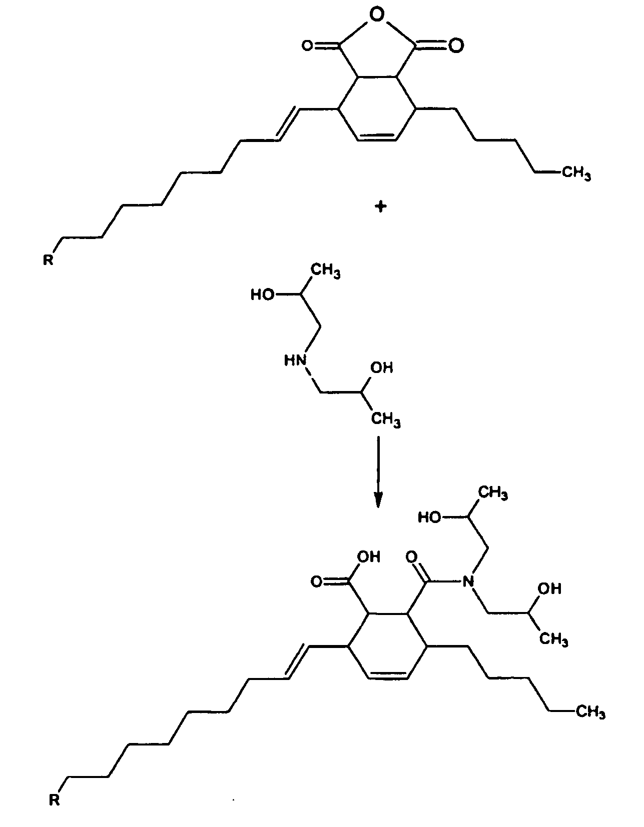

The reaction with the second acid part of the grafted maleic anhydride is not shown for reason of simplicity. Likewise, R representing the rest (other branches) of the fatty acid is not shown for reason of simplicity. These other branches may likewise be grafted with maleic anhydride or otherwise react with the same or neighbouring molecules for example as indicated below. The resulting molecule may hereafter be endcapped for example by fatty acid or reacted with acid functional polymers or molecules like polyester, carboxylic acids or organic oil moieties. If the first agent also comprises acid groups, such as for example the case when the first agent is a carboxylic acid, then each of these acid groups may react to other molecules or internally to for example OH groups of the same molecule.

The final structure of the grafted autoxidisable polyesteramide resin may for example be represented by the following structure:

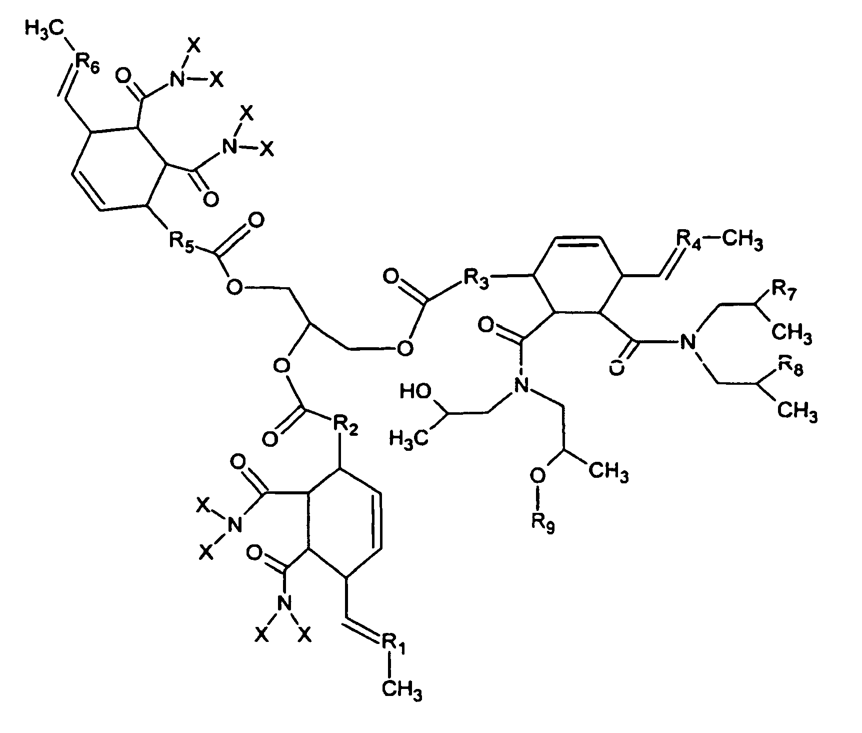

Note: The two possible positions of the linoleic moieties are random as a result of the random selectivity of the Diels Alder addition towards the three conjugated double bonds of the eleostearic moieties.

In this above presented structure, R₁, R₂, R₃, R₄, R₅ and R₆ are parts of tung oil; R₇, R₈ and R₉ are ester bonded fatty acids, polyester chain and/or OH groups. X may likewise be endcapped parts of diisopropanolamine as described previously or comprise connections to further molecules such as diacids and oil molecules, fatty acid molecules or polymers. If the endcapping groups are ester bonded fatty acids, oil molecules or another entity, which may also act as an first agent, one or more of these groups may be grafted to other sites of the same or neighbouring molecules.

The invention will be elucidated with reference to the following, non-limiting examples.

### Example 1

### Resin preparation (Resin I)

177 g of tung oil and 722 g tall oil fatty acid were charged to the reactor and heated to 120 °C. At 120 °C 50 g of maleic anhydride was dosed to the reactor. A slight exotherm till approximately 145 °C was detected. The temperature was raised to 160 °C under reflux conditions. After one hour at 160 °C 102 g glycerol and 40 g of xylene were charged to the reactor. The reactor temperature was raised to 245 °C and distillation was conducted under azeotropic conditions until the acid value was < 16 mg KOH/g resin. At 220 °C the xylene was stripped under vacuum conditions. After all the xylene was stripped the resin was diluted to 90 % solid with Exxsol D40 (hydrocarbon fluid from ExxonMobil Chemical).

Thereafter the resin was discharged. The number average molecular weight Mn was 1802 g/mol and the weight averaged molecular weight Mw was 10664 g/mol as established by Gel Permeation Chromatography (GPC) technique as determined on an Alliance Waters 2695 GPC with three consecutive PL-gel columns, type Mixed-B, I/d = 300/7.5 mm (Polymer Laboratories) using stabilized tetrahydrofuran (THF) (BHT stable) as the eluent at 1 mL/min. at 40 °C and using an Alliance Waters 2410 refractive index detector. A set of polystyrene standards was used to calibrate the GPC equipment.

### Example 2

### Resin preparation (Resin II)

169 g of tung oil and 691 g tall oil fatty acid were charged to the reactor and heated to 120°C. At 120°C 48 g of maleic anhydride was dosed to the reactor. A slight exotherm till approximately 145°C was detected. The temperature was raised to 160°C under reflux conditions. After one hour at 160°C 141 g diisopropanolamine and 40 g of xylene were charged to the reactor and distillation was conducted under azeotropic conditions until the acid value was < 16 mg KOH/g resin. xylene was stripped under vacuum conditions. After all the xylene was stripped the resin was diluted to 90 % solid with Exxsol D40.

Thereafter the resin was discharged. The average molecular weights were established by Gel Permeation Chromatography technique, and Mn was 2037 g/mol and the Mw was 26068 g/mol.

### Example 3 (comparative resin)

### Resin preparation (Comparative Resin III)

29 g of isophthalic acid, 151 g of pentaerythritol, 1065 g of tall oil fatty acid, 30 g of maleic anhydride and 50 g of xylene were charged to the reactor and heated to 230°C under azeotropic conditions until the acid value was < 16 mg KOH/g resin. At 200°C the xylene was stripped under vacuum conditions. After all the xylene was stripped the resin was diluted to 90% solid with Exxsol D40.

Thereafter the resin was discharged. The average molecular weights were established by Gel Permeation Chromatography technique, and Mn was 1800 g/mol and the Mw was 4556 g/mol.

The resin still contained a significant amount of unreacted maleic anhydride which was visible by needle shaped crystals. This clearly shows that the build-up of molecular weight by using maleic anhydride did not succeed completely as planned. This is also expressed by the relative low Mw.

### Example 4

### Preparation of coating composition 1

Coating composition 1 was obtained by mixing with a normal lab stirrer 25 g of resin as derived in Example 1 with 1.44 g Nuodex Ca 5 (Elementis), 0.21 g Nuodex Co 10 (Elementis), 1.1 g Nuodex Zr 12 (Elementis) and 0.25 g Exkin 2 (Elementis). Nuodex Co 10, Nuodex Zr 12 and Nuodex Ca 5 are drier salts. Exkin 2 is an antiskinning agent.

### Example 5

### Preparation of coating composition 2

Coating composition 2 was obtained by mixing with a normal lab stirrer 25 g of resin as derived in Example 2 with 1.44 g Nuodex Ca 5 (Elementis), 0.21 g Nuodex Co 10 (Elementis), 1.1 g Nuodex Zr 12 (Elementis) and 0.25 g Exkin 2 (Elementis).

### Example 6 (comparative coating)

### Preparation of comparative coating composition 3

Comparative coating composition 3 was obtained by mixing with a normal lab stirrer 80 g of resin as derived in Example with 1.44 g Nuodex Ca 5 (Elementis), 0.21 g Nuodex Co 10 (Elementis), 1.1 g Nuodex Zr 12 (Elementis) and 0.25 g Exkin 2 (Elementis).

### Application tests

From a practical point of view it makes sense to discriminate between 3 stages of drying. The first stage of drying is finished when the autoxidation results into solidification of the surface of the film. The very moment of surface solidification is quantified by the Cotton Wool Adhesion Test.

The cotton wool adhesion test measures the rate of surface drying of a coating film. The cotton wool adhesion test was conducted on a coating film applied with a 100 µm slit applicator on a glass plate. After applying the coating composition, a swatch of cotton wool (a lose ball of approximately 0.2 g and a diameter of approximately 3 cm) was dropped from a height of 5 cm on the paint film. After 10 seconds the glass panel was turned over 180° and it was observed if the cotton wool drops off without leaving cotton fibres on the surface. When the cotton wool no longer stuck to the surface, the time was recorded.

The second stage of drying is finished when the coating film has been solidified over its full film height. The drying stage must be finished in order to achieve anti-blocking properties. This 'in-depth' solidification of the coating film is quantified by the Indentation Test.

The extent of in-depth curing was measured as a function of the drying time on a coating film applied on a glass plate with a 200 µm slit applicator. The glass plate was positioned on the bottom plate of a Physica MCR 301 rheometer. Subsequently a rod-shaped indentor with a diameter of 3.5 mm was pressed on to the paint film with a force of 20 N. As long as the lower part of the paint film was not sufficiently cured to withstand the pressure applied, it was squeezed out between the indentor and the glass plate. The distance between the tip of the indentor and the glass plate that remains after 5 minutes pressing was used as a measure for the in-depth drying. The larger this distance was, the better the in-depth drying. The test was performed at 23 °C.

The test results of both the cotton wool drying and the indentation are presented in table 1 below.

Viscosity values were measured with a Physica MCR301 rheometer using a cone/plate measuring system characterised by a cone diameter of 25 mm and a cone angle of 1°. Flow curves were measured at a temperature of 23 °C as a function of shear rate, starting at a shear rate of 5 000 s⁻¹. Within a time interval of 90 s subsequently, the shear rate was stepwise reduced down to 1 s⁻¹, immediately followed by a stepwise shear rate increase up to 5 000 s⁻¹. Viscosity measured within the shear rate range of 20-40 s⁻¹ is considered to be responsible for the resistance of the paint against dripping from the brush. Viscosity measured at a shear rate of 5 000 s⁻¹ is considered to be responsible for the 'brush resistance' experienced during applying the paint (= application viscosity). Viscosity measured at a shear rate of 1 s⁻¹ is considered to be responsible for the 'sag resistance' experienced after application of the paint.

The viscosity results are presented in table 1 below.

From the Examples described above and the test results for coating 1 (example 4), coating 2 (example 5) and for the comparative coating 3 (example 6) presented in table 1 it can be concluded that it is difficult to prepare a resin via the traditional route as described in comparative Example 3 with a molecular weight Mw as high as for the polyester resins according to the invention prepared as described in Examples 1 and 2. Consequently this traditional route leads to lower molecular weights that result in a longer drying time and less in-depth drying after 20 hours of drying.

The low viscosity obtained for the comparative coating composition 3 can be explained by the low weight average molecular weight and low number average molecular weight characterizing the comparative coating composition 3. In comparison, the coating compositions 1 and 2 prepared according to the method of the invention, which although having a low number average molecular weight had a much higher weight average molecular weight than comparative composition 3, and yet still had low viscosities.

**Table 1**

| | Coating 1 (example 4) | Coating 2 (example 5) | Comparative Coating 3 (example 6) |
|---|---|---|---|
| Resin I | 25 | | |
| Resin II | | 25 | |
| Resin III | | | 25 |
| Nuodex Co 10% | 0.21 | 0.21 | 0.21 |
| Nuodex Ca 5% | 1.44 | 1.44 | 1.44 |
| Nuodex Zr 12% | 1.1 | 1.1 | 1.1 |
| Exkin 2 | 0.25 | 0.25 | 0.25 |
| Total Weight | 28.00 | 28.00 | 28.00 |
| Resin parameters | | | |
| Oil length | 94 | 90 | 94 |
| Acid Value (mg KOH/g) | 16.0 | 10.0 | 14.9 |
| OH Value (mg KOH/g) | 9.5 | 6.3 | 15.2 |
| Mn theoretical | 1762 | 1842 | 1830 |
| Mn measured by GPC | 1800 | 2037 | 1802 |
| Mw measured by GPC | 10664 | 26068 | 4556 |
| PDI = Mw/Mn (calculated) | 5.9 | 12.8 | 2.5 |
| Appearance | clear | clear | needles |
| Paint parameters | | | |
| Viscosity (Pa.s) 1 s⁻¹ | 0.953 | 2.970 | 0.446 |
| Viscosity (Pa.s) 5000 s⁻¹ | 1.010 | 4.790 | 0.453 |
| Solids (%) | 90.4 | 90.9 | 88.9 |
| Density (g/ml) | 0.975 | 0.975 | 0.975 |
| VOC (g/l) | 94 | 89 | 108 |
| Coating test results | | | |
| Indentation (µm) | 48 | 43 | 37 |
| Drying (cotton wool test) (hrs:min) | 05:15 | 05:05 | 06:15 |

## Claims

1. A method for preparing a grafted autoxidisable polyester resin wherein the resin is obtained by steps comprising:
a) grafting of at least a diacid or its anhydride onto a first agent by a Diels-Alder and/or Ene reaction; and
b) reacting the product of step a) with a second agent;
wherein the first agent comprises at least one first functionality selected from a group consisting of a first set of conjugated double bonds or a first allylic hydrogen;
wherein the diacid or its anhydride and the second agent is further reacted with an endcap fatty acid,
wherein the endcap fatty acid is an unsaturated (C10-C28) carboxylic acid; wherein the first agent comprises at least one further functionality selected from the group consisting of a set of conjugated double bonds, allylic hydrogen, non conjugated double bond, OH group, COOH group and amino group;
wherein the second agent is selected from the group consisting of alcohol with a number average hydroxy functionality > 2.0, dialkanolamine or mixtures thereof; and
wherein the grafted autoxidisable polyester resin has an oil length ≥ 80, a number average molecular weight Mn ≥ 1000 g/mol and a PDI ≥ 3.

2. A method according to claim 1, wherein the diacid or its anhydride comprises at least 80 % of the molar amount of diacid or its anhydride selected from the group consisting of maleic acid, maleic anhydride, itaconic acid, fumaric acid or mixtures thereof.

3. A method according to any one of claims 1 or 2, wherein the first agent is selected from the group consisting of unsaturated fatty acids, modified fatty acids and oils and mixtures thereof.

4. A method according to any one of the claims 1 to 3 where the first agent comprises at least one eleostearic moiety.

5. A method according to any one of the claims 1 to 3, wherein the first agent comprises at least two sets of conjugated double bonds. '

6. A method according to any one of the claims 1 to 5, wherein the first agent comprises at least 80 % by weight of unsaturated oils selected from the group consisting of soybean oil, tung oil, calendula oil, tall oil, rosin, sunflower oil, dehydrated castor oil, linseed oil, corresponding fatty acids, corresponding esters, and mixtures thereof.

7. A method according to any one of the claims 1 to 6 wherein the second agent is alcohol with a number average hydroxy functionality > 2.0.

8. A method according to any one of the claims 1 to 7, wherein the second agent when an alcohol comprises at least 50 weight % of an alcohol with a hydroxy functionality ≥ 3.

9. A method according to any one of the claims 1 to 6 wherein the second agent when a dialkanolamine is 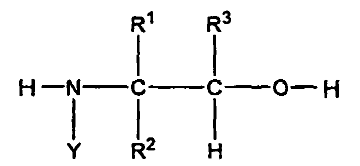 wherein 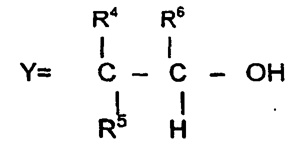 in which R¹, R², R³, R⁴, R⁵ and R⁶ may, independently of one another, be the same or different, H or C1-C4 alkyl.

10. A method according to claim 9, wherein the dialkanolamine comprises at least 80% by weight of diisopropanolamine.

11. A method according to any one of the claims 1 to 10, wherein the ratio (A : (x · M)) ranges between 0.25 : 1.00 and 1.50 : 1.00,
in which
A = the molar amount of the diacid or its anhydride,
M = the molar amount of the first agent, and
x = the grafting functionality of the first agent.

12. A method according to any one of the claims 1 to 11, wherein the molar ratio of the second agent to diacid or its anhydride is ≥ 0.5.

13. A method according to any one of the claims 1 to 12, wherein the diacid or its anhydride is first reacted with the first agent in a ratio (A: (x · M)) of between 0.25 : 1.00 and 1.50 : 1.00 at a temperature between 140 °C and 200 °C to form a grafted diacid or its anhydride,
whereafter in a second step the second agent is added in such amount that the molar ratio of the second agent to diacid or its anhydride is ≥ 0.5 at a temperature between 120 °C and 260 °C, a grafted autoxidisable polyester resin is obtained through polycondensation.

14. A method according to any one of claims 1 to 12, wherein the diacid or its anhydride, second agent and first agent are reacted simultaneously at a temperature between 120 °C and 180 °C, wherein the molar ratio of the second agent to diacid or its anhydride is ≥ 0.5 and wherein the ratio (A : (x · M)) ranges between 0.25 : 1.00 and 1.50 : 1.00.

15. A method according to claim 14, wherein the diacid or its anhydride, second agent and first agent are reacted simultaneously at least partially at a temperature between 90 °C and 120 °C in the presence of a catalyst, wherein the molar ratio of the second agent to diacid or its anhydride is ≥ 0.5 and wherein.the ratio (A: (x ·M)) ranges between 0.25 : 1.00 and 1.50 : 1.00.

16. A grafted autoxidisable polyester resin obtainable by a method according to any one of the claims 1 to 15.

17. Use of the resin according to claim 16 in a high solid coating composition.

18. A coating composition comprising at least 5 weight % by weight of the resin according to claim 16.

19. A coating composition comprising a grafted autoxidisable polyester resin wherein the resin is obtainable by a method according to any one of the claims 1 to 15, wherein step a) comprises grafting of at least 5 % by weight of a diacid or its anhydride onto a first agent, and wherein the first agent comprises unsaturated oils selected from the group consisting of soybean oil, tung oil, calendula oil, tall oil, rosin, sunflower oil, dehydrated castor oil, linseed oil, corresponding fatty acids, corresponding esters, and mixtures thereof.

20. A coating composition comprising a grafted autoxidisable polyester resin wherein the resin is obtainable by a method according to any one of the claims 1 to 15, said coating composition having an initial drying time, as measured by a cotton wool adhesion test, of less than 5.5 hours and a VOC of < 100 g/l at an application viscosity of the grafted autoxidisable polyester resin of less that 5.0 Pa s measured at a shear rate of 5000 s⁻¹ at 23°C.

## Patentansprüche

1. Verfahren zur Herstellung eines gepfropften autoxidierbaren Polyesterharzes, bei dem man das Harz durch Schritte erhält, die folgendes umfassen:
a) Aufpfropfen von mindestens einer Disäure oder eines Disäureanhydrids auf ein erstes Agens durch eine Diels-Alder- und/oder En-Reaktion und
b) Umsetzen des Produkts aus Schritt a) mit einem zweiten Agens;
wobei das erste Agens mindestens eine erste Funktionalität aus der Gruppe bestehend aus einem ersten Satz von konjugierten Doppelbindungen oder einem ersten allylischen Wasserstoff umfaßt;
wobei die Disäure oder das Disäureanhydrid und das zweite Agens weiter mit einer Endgruppenverschluß-Fettsäure umgesetzt werden,
wobei es sich bei der Endgruppenverschluß-Fettsäure um eine ungesättigte (C10-C28)-Carbonsäure handelt;
wobei das erste Agens mindestens eine weitere Funktionalität aus der Gruppe bestehend aus einem Satz von konjugierten Doppelbindungen, einem allylischen Wasserstoff, einer nicht konjugierten Doppelbindung, einer OH-Gruppe, einer COOH-Gruppe und einer Aminogruppe umfaßt;
wobei das zweite Agens aus der Gruppe bestehend aus Alkohol mit einer zahlenmittleren Hydroxyfunktionalität > 2,0, Dialkanolamin oder Mischungen davon ausgewählt wird und
wobei das gepfropfte autoxidierbare Polyesterharz eine Öllänge ≥ 80, ein zahlenmittleres Molekulargewicht Mn ≥ 1000 g/mol und einen PDI ≥ 3 aufweist.

2. Verfahren nach Anspruch 1, bei dem die Disäure oder das Disäureanhydrid mindestens 80% der molaren Menge an Disäure oder Disäureanhydrid aus der Gruppe bestehend aus Maleinsäure, Maleinsäureanhydrid, Itaconsäure, Fumarsäure oder Mischungen davon umfaßt.

3. Verfahren nach einem der Ansprüche 1 oder 2, bei dem man das erste Agens aus der Gruppe bestehend aus ungesättigten Fettsäuren, modifizierten Fettsäuren und Ölen und Mischungen davon auswählt.

4. Verfahren nach einem der Ansprüche 1 bis 3, bei dem das erste Agens mindestens eine Eleostearingruppierung umfaßt.

5. Verfahren nach einem der Ansprüche 1 bis 3, bei dem das erste Agens mindestens zwei Sätze von konjugierten Doppelbindungen umfaßt.

6. Verfahren nach einem der Ansprüche 1 bis 5, bei dem das erste Agens mindestens 80 Gew.-% ungesättigte Öle aus der Gruppe bestehend aus Sojaöl, Holzöl, Calendulaöl, Tallöl, Kolophonium, Sonnenblumenöl, dehydratisiertem Ricinusöl, Leinöl, entsprechenden Fettsäuren, entsprechenden Estern und Mischungen davon umfaßt.

7. Verfahren nach einem der Ansprüche 1 bis 6, bei dem es sich bei dem zweiten Agens um einen Alkohol mit einer zahlenmittleren Hydroxyfunktionalität > 2,0 handelt.

8. Verfahren nach einem der Ansprüche 1 bis 7, bei dem das zweite Agens, wenn es sich dabei um einen Alkohol handelt, mindestens 50 Gew.-% eines Alkohols mit einer Hydroxyfunktionalität ≥ 3,0 umfaßt.

9. Verfahren nach einem der Ansprüche 1 bis 6, bei dem es sich bei dem zweiten Agens, wenn es sich dabei um ein Dialkanolamin handelt, um 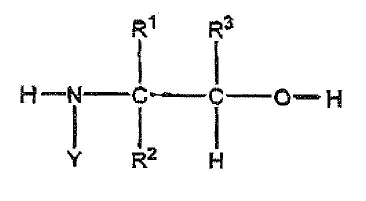 worin 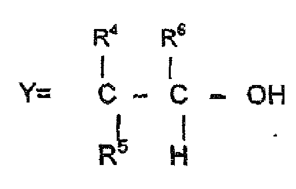 worin R¹, R², R³, R⁴, R⁵ und R⁶ unabhängig voneinander gleich oder verschieden sein und für H oder C1-C4-Alkyl stehen können, handelt.

10. Verfahren nach Anspruch 9, bei dem das Dialkanolamin mindestens 80 Gew.-% Diisopropanolamin umfaßt.

11. Verfahren nach einem der Ansprüche 1 bis 10, bei dem das Verhältnis (A : (x - M)) im Bereich zwischen 0,25 : 1,00 und 1,50 : 1,00 liegt,
wobei
A = molare Menge der Disäure oder des Disäureanhydrids,
M = molare Menge des ersten Agens und
x = Pfropffunktionalität des ersten Agens.

12. Verfahren nach einem der Ansprüche 1 bis 11, bei dem das Molverhältnis von zweitem Agens zu Disäure oder Disäureanhydrid ≥ 0,5 ist.

13. Verfahren nach einem der Ansprüche 1 bis 12, bei dem man die Disäure oder Disäureanhydrid zunächst mit dem ersten Mittel in einem Verhältnis (A : (x - M)) zwischen 0,25 : 1,00 und 1,50 : 1,00 bei einer Temperatur zwischen 140°C und 200°C umsetzt, wobei man eine gepfropfte Disäure oder ein gepfropftes Disäureanhydrid erhält,
wonach man in einem zweiten Schritt das zweite Agens bei einer Temperatur zwischen 120°C und 260°C in einer solchen Menge zugibt, daß das Molverhältnis von zweitem Mittel zu Disäure oder Disäureanhydrid ≥ 0,5 ist, so daß man durch Polykondensation ein gepfropftes autoxidierbares Polyesterharz erhält.

14. Verfahren nach einem der Ansprüche 1 bis 12, bei dem man die Disäure oder das Disäureanhydrid, das zweite Agens und das erste Agens gleichzeitig bei einer Temperatur zwischen 120°C und 180°C umsetzt, wobei das Molverhältnis von zweitem Agens zu Disäure oder Disäureanhydrid ≥ 0,5 ist und das Verhältnis (A : (x - M)) zwischen 0,25 : 1,00 und 1,50 : 1,00 liegt.

15. Verfahren nach Anspruch 14, bei dem man die Disäure oder das Disäureanhydrid, das zweite Agens und das erste Agens gleichzeitig zumindest teilweise bei einer Temperatur zwischen 90°C und 120°C in Gegenwart eines Katalysators umsetzt, wobei das Molverhältnis von zweitem Agens zu Disäure oder Disäureanhydrid ≥ 0,5 ist und das Verhältnis (A : (x - M)) zwischen 0,25 : 1,00 und 1,50 : 1,00 liegt.

16. Gepfropftes autoxidierbares Polyesterharz, das nach einem Verfahren nach einem der Ansprüche 1 bis 15 erhältlich ist.

17. Verwendung des Harzes nach Anspruch 16 in einer feststoffreichen Beschichtungszusammensetzung.

18. Beschichtungszusammensetzung, die mindestens 5 Gew.-% des Harzes nach Anspruch 16 umfaßt.

19. Beschichtungszusammensetzung, umfassend ein gepfropftes autoxidierbares Polyesterharz, das nach einem Verfahren nach einem der Ansprüche 1 bis 15 erhältlich ist, wobei man in Schritt a) mindestens 5 Gew.-% einer Disäure oder eines Disäureanhydrids auf ein erstes Agens aufpfropft und das erste Agens ungesättigte Öle aus der Gruppe bestehend aus Sojaöl, Holzöl, Calendulaöl, Tallöl, Kolophonium, Sonnenblumenöl, dehydratisiertem Ricinusöl, Leinöl, entsprechenden Fettsäuren, entsprechenden Estern und Mischungen davon umfaßt.

20. Beschichtungszusammensetzung, umfassend ein gepfropftes autoxidierbares Polyesterharz, das nach einem Verfahren nach einem der Ansprüche 1 bis 15 erhältlich ist, wobei die Beschichtungszusammensetzung eine mit Hilfe eines Wattehaftungstests gemessene Anfangstrocknungszeit von weniger als 5,5 Stunden und einen VOC < 100 g/l bei einer bei einer Scherrate von 5000 s⁻¹ bei 23°C gemessenen Applikationsviskosität des gepfropften autoxidierbaren Polyesterharzes von weniger als 5,0 Pa s aufweist.

## Revendications

1. Procédé de préparation d'une résine de polyester greffée auto-oxydable, la résine étant obtenue par des étapes comprenant :
a) le greffage d'au moins un diacide ou son anhydride sur un premier agent par une réaction de Diels-Alder et/ou Ene ; et
b) la mise en réaction du produit de l'étape a) avec un second agent ;
le premier agent comprenant au moins une première fonctionnalité choisie dans un groupe constitué par un premier ensemble de doubles liaisons conjuguées ou un premier hydrogène allylique ;
le diacide ou son anhydride et le second agent étant encore mis en réaction avec un acide gras « end-cap », l'acide gras « end-cap » étant un acide carboxylique en C10-C28 insaturé ;
le premier agent comprenant au moins une autre fonctionnalité choisie dans le groupe constitué par un ensemble de doubles liaisons conjuguées, un hydrogène allylique, une double liaison non conjuguée, un groupe OH, un groupe COOH et un groupe amino ;
le second agent étant choisi dans le groupe constitué par un alcool ayant une fonctionnalité hydroxy moyenne en nombre > 2, une dialcanolamine ou leurs mélanges ; et
la résine de polyester greffée auto-oxydable ayant un rapport huile/résine ≥ 80, un poids moléculaire moyen en nombre Mn ≥ 1 000 g/mol et un PDI ≥ 3.

2. Procédé selon la revendication 1, dans lequel le diacide ou son anhydride comprend au moins 80 % de la quantité molaire d'un diacide ou son anhydride choisi dans le groupe constitué par l'acide maléique, l'anhydride maléique, l'acide itaconique, l'acide fumarique ou leurs mélanges.

3. Procédé selon l'une quelconque des revendications 1 ou 2, dans lequel le premier agent est choisi dans le groupe constitué par les acides gras insaturés, les acides gras modifiés et leurs huiles et mélanges.

4. Procédé selon l'une quelconque des revendications 1 à 3, dans lequel le premier agent comprend au moins une fraction éléostéarique.

5. Procédé selon l'une quelconque des revendications 1 à 3, dans lequel le premier agent comprend au moins deux ensembles de doubles liaisons conjuguées.

6. Procédé selon l'une quelconque des revendications 1 à 5, dans lequel le premier agent comprend au moins 80 % en poids d'huiles insaturées choisies dans le groupe constitué par l'huile de soja, l'huile de tung, l'huile de calendula, le tallöl, la colophane, l'huile de tournesol, l'huile de ricin déshydratée, l'huile de lin, les acides gras correspondants, les esters correspondants et leurs mélanges.

7. Procédé selon l'une quelconque des revendications 1 à 6, dans lequel le second agent est un alcool ayant une fonctionnalité hydroxy moyenne en nombre > 2,0.

8. Procédé selon l'une quelconque des revendications 1 à 7, dans lequel le second agent, lorsqu'il est un alcool, comprend au moins 50 % en poids d'un alcool ayant une fonctionnalité hydroxy ≥ 3.

9. Procédé selon l'une quelconque des revendications 1 à 6, dans lequel le second agent, lorsqu'il est une dialcanolamine, est 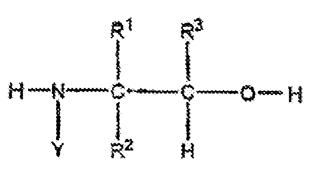 dans laquelle 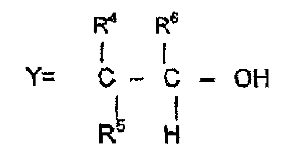 R¹, R², R³, R⁴, R⁵ et R⁶ pouvant, indépendamment les uns des autres, être identiques ou différents, H ou un alkyle en C1-C4.

10. Procédé selon la revendication 9, dans lequel la dialcanolamine comprend au moins 80 % en poids de diisopropanolamine.

11. Procédé selon l'une quelconque des revendications 1 à 10, dans lequel le rapport (A:(x·M)) est compris entre 0,25:1,00 et 1,50:1,00,
avec
A = la quantité molaire du diacide ou son anhydride,
M = la quantité molaire du premier agent et
x = la fonctionnalité de greffage du premier agent.

12. Procédé selon l'une quelconque des revendications 1 à 11, dans lequel le rapport molaire entre le second agent et le diacide ou son anhydride est ≥ 0,5.

13. Procédé selon l'une quelconque des revendications 1 à 12, dans lequel le diacide ou son anhydride est tout d'abord mis en réaction avec le premier agent en un rapport (A:(x·M)) compris entre 0,25:1,00 et 1,50:1,00, à une température comprise entre 140 °C et 200 °C, pour former un diacide greffé ou son anhydride,
puis, lors d'une seconde étape, le second agent est ajouté en une quantité telle que le rapport molaire entre le second agent et le diacide ou son anhydride soit ≥ 0,5, à une température comprise entre 120 °C et 260 °C, une résine de polyester greffée auto-oxydable étant obtenue par polycondensation.

14. Procédé selon l'une quelconque des revendications 1 à 12, dans lequel le diacide ou son anhydride, le second agent et le premier agent sont mis en réaction simultanément à une température comprise entre 120 °C et 180 °C, le rapport molaire entre le second agent et le diacide ou son anhydride étant ≥ 0,5 et le rapport (A:(x·M)) étant compris entre 0,25:1,00 et 1,50:1,00.

15. Procédé selon la revendication 14, dans lequel le diacide ou son anhydride, le second agent et le premier agent sont mis en réaction simultanément au moins partiellement à une température comprise entre 90 °C et 120 °C en présence d'un catalyseur, le rapport molaire entre le second agent et le diacide ou son anhydride étant ≥ 0,5 et le rapport (A:(x·M)) étant compris entre 0,25:1,00 et 1,50:1,00.

16. Résine de polyester greffée auto-oxydable pouvant être obtenue par un procédé selon l'une quelconque des revendications 1 à 15.

17. Utilisation de la résine selon la revendication 16 dans une composition de revêtement à teneur élevée en solides.

18. Composition de revêtement comprenant au moins 5 % en poids de la résine selon la revendication 16.

19. Composition de revêtement comprenant une résine de polyester greffée auto-oxydable, dans laquelle la résine peut être obtenue par un procédé selon l'une quelconque des revendications 1 à 15, l'étape a) comprenant le greffage d'au moins 5 % en poids d'un diacide ou son anhydride sur un premier agent, et le premier agent comprenant des huiles insaturées choisies dans le groupe constitué par l'huile de soja, l'huile de tung, l'huile de calendula, le tallöl, la colophane, l'huile de tournesol, l'huile de ricin déshydratée, l'huile de lin, les acides gras correspondants, les esters correspondants et leurs mélanges.

20. Composition de revêtement comprenant une résine de polyester greffée auto-oxydable, dans laquelle la résine peut être obtenue par un procédé selon l'une quelconque des revendications 1 à 15, ladite composition de revêtement ayant un temps de séchage initial, tel que mesuré par un test d'adhésion d'ouate, inférieur à 5,5 heures et un COV < 100 g/l à une viscosité d'application de la résine de polyester greffée auto-oxydable inférieure à 5,0 Pa s mesurée à un taux de cisaillement de 5 000 s⁻¹ à 23 °C.
